# EUROPEAN PATENT APPLICATION

(11) **EP 3 480 704 A1**
(43) Date of publication of application: **08.05.2019**
(21) Application number: 18836804.7
(22) Date of filing: 26.06.2018
(51) Int. Cl.: G06F 16/00

(54) **METHOD AND APPARATUS FOR INFORMATION INTERACTION**

(30) Priority: 19.09.2017 CN 201710847084
(71) Applicant: Baidu Online Network Technology (Beijing) Co., Ltd., Beijing 100085 (CN)
(72) Inventor: TIAN, Yiaoli, Beijing 100085 (CN); FANG, Gaolin, Beijing 100085 (CN); GU, Xiaoguang, Beijing 100085 (CN); MI, Xue, Beijing 100085 (CN); SUN, Ke, Beijing 100085 (CN); DING, Xinzhe, Beijing 100085 (CN); SUN, Ruiying, Beijing 100085 (CN)
(74) Representative: Nederlandsch Octrooibureau
(86) International application number: PCT/CN2018/092870
(87) International publication number: WO 2019/056821

(57) **Abstract**

A method and an apparatus for information interaction are provided. An embodiment of the method includes: obtaining to-be-processed information, the to-be-processed information comprising textual information and an image; extracting a feature word from the textual information of the to-be-processed information, and searching for descriptive information of the image within the to-be-processed information based on the feature word, the feature word being used to characterize a search request for the image, and the descriptive information being used to characterize a textual description of the image; and constructing response information to the to-be-processed information from the descriptive information. The embodiment constructs response information from the descriptive information, thereby enabling the information interaction with the to-be-processed information and improving the efficiency of information interaction.

## Description

### CROSS-REFERENCE TO RELATED APPLICATIONS

This disclosure claims priority to Chinese Patent Application No. 201710847084.6, filed in China on September 19, 2017, entitled "METHOD AND APPARATUS FOR INFORMATION INTERACTION," by Baidu Online Network Technology (Beijing) Co., Ltd., the contents of which are incorporated herein by reference in their entirety.

### TECHNICAL FIELD

The present disclosure relates to the technical field of data processing, particularly to the technical field of information interaction, and more particularly to a method and apparatus for information interaction.

### BACKGROUND

At present, image recognition technology is one of the rapidly developing technologies. One important trend of the image recognition technology is to meet the users' knowledge needs through recognizing and understanding the contents in an image. In the existing image recognition, a to-be-recognized image is usually imported into an image search engine to find an image identical or similar to the imported image, i.e. reverse image search.

However, not every image needs a reverse image search in daily work. The need for a reverse image search depends on the actual needs. In many cases, when a user conveys information through text and image, he may not have built a corresponding relationship between the text and the image directly (for example, a text and an image are included, but a description of the image through the text may not exist). A user, who sees the text and the image, may be unable to provide a corresponding feedback (for example, the user don't understand the content in the image), resulting in incorrect or inaccurate delivery of the information, and low efficiency in information interaction.

### SUMMARY

An objective of the present disclosure is to provide a method and apparatus for information interaction in order to solve a part of the technical problems recited in the Background above.

In a first aspect, some embodiments of the disclosure provide a method for information interaction, including: receiving a user request for web browsing, wherein the request for web browsing contains a URL; obtaining to-be-processed information, the to-be-processed information comprising textual information and an image; extracting a feature word from the textual information of the to-be-processed information, and searching for descriptive information of the image within the to-be-processed information based on the feature word, the feature word being used to characterize a search request for the image, and the descriptive information being used to characterize a textual description of the image; constructing response information to the to-be-processed information from the descriptive information.

In some embodiments, the extracting a feature word from the textual information of the to-be-processed information includes: performing a semantic recognition on the textual information to obtain semantic information corresponding to the textual information; and extracting the feature word from the semantic information.

In some embodiments, the searching for descriptive information of the image within the to-be-processed information based on the feature word includes: importing the image into an image search model to obtain a to-be-matched image set corresponding to the image, wherein the to-be-matched image set comprises at least one to-be-matched image, and the image search model is configured to characterize a first corresponding relationship between the image and the to-be-matched image; importing the to-be-matched image into a semantic tagging model to obtain a semantic tag set corresponding to the to-be-matched image set, wherein the semantic tagging model is configured to characterize a second corresponding relationship between the to-be-matched image and a semantic tag, and the semantic tag is used to provide a textual description of the to-be-matched image; and selecting a to-be-recognized semantic tag from the semantic tag set, and using interpretive information of a noun in the to-be-recognized semantic tag, the noun corresponding to the image, as the descriptive information.

In some embodiments, the selecting a to-be-recognized semantic tag from the semantic tag set includes: counting numbers of identical semantic tags within the semantic tag set, and using the semantic tag having a maximum number as the to-be-recognized semantic tag.

In some embodiments, the method further includes: correcting the descriptive information, wherein the correcting the descriptive information includes: receiving feedback information corresponding to the response information, wherein the feedback information is used to evaluate an accuracy of the response information; performing a semantic recognition on the feedback information to obtain the accuracy; choosing a secondary to-be-recognized tag from the semantic tags in the semantic tag set excluding the to-be-recognized semantic tag, in response to determining that the accuracy is below a preset threshold; using the interpretive information of the noun in the secondary to-be-recognized tag, the noun corresponding to the image, as secondary descriptive information; and constructing the response information to the to-be-processed information from the secondary descriptive information.

In a second aspect, some embodiments of the disclosure provide an apparatus for information interaction, including: a to-be-processed information obtaining unit configured to obtain to-be-processed information, the to-be-processed information comprising textual information and an image; a descriptive information obtaining unit configured to extract a feature word from the textual information of the to-be-processed information, and search for descriptive information of the image within the to-be-processed information based on the feature word, the feature word being used to characterize a search request for the image, and the descriptive information being used to characterize a textual description of the image; and a response information constructing unit configured to construct response information to the to-be-processed information from the descriptive information.

In some embodiments, the descriptive information obtaining unit includes: a semantic recognition subunit configured to perform a semantic recognition on the textual information to obtain semantic information corresponding to the textual information; and a feature word extracting subunit configured to extract the feature word from the semantic information.

In some embodiments, the descriptive information obtaining unit includes: a to-be-matched image obtaining subunit configured to import the image into an image search model to obtain a to-be-matched image set corresponding to the image, wherein the to-be-matched image set comprises at least one to-be-matched image, and the image search model is configured to characterize a first corresponding relationship between the image and the to-be-matched image; a semantic tag obtaining subunit configured to import the to-be-matched image into a semantic tagging model to obtain a semantic tag set corresponding to the to-be-matched image set, wherein the semantic tagging model is configured to characterize a second corresponding relationship between the to-be-matched image and a semantic tag, and the semantic tag is used to provide a textual description of the to-be-matched image; and a descriptive information obtaining subunit configured to select a to-be-recognized semantic tag from the semantic tag set, and use interpretive information of a noun in the to-be-recognized semantic tag, the noun corresponding to the image, as the descriptive information.

In some embodiments, the descriptive information obtaining subunit is further configured to count numbers of identical semantic tags within the semantic tag set, and use the semantic tag having a maximum number as the to-be-recognized semantic tag.

In some embodiments, the apparatus further includes: a correction unit configured to correct the descriptive information, the correction unit comprises: a feedback information receiving subunit configured to receive feedback information corresponding to the response information, wherein the feedback information is used to evaluate an accuracy of the response information; an accuracy obtaining subunit configured to perform a semantic recognition on the feedback information to obtain the accuracy; a secondary to-be-recognized tag obtaining subunit configured to choose a secondary to-be-recognized tag from the semantic tags in the semantic tag set excluding the to-be-recognized semantic tag, in response to determining that the accuracy is below a preset threshold; a secondary descriptive information obtaining subunit configured to use the interpretive information of the noun in the secondary to-be-recognized tag, the noun corresponding to the image, as secondary descriptive information; and a secondary response information constructing subunit configured to construct the response information to the to-be-processed information from the secondary descriptive information.

In a third aspect, some embodiments of the disclosure provide a server, including: one or more processor; and a storage device that is configured to store one or more programs which, when executed by the one or more processors, cause the processors to perform the method for information interaction as recited in the first aspect.

In a forth aspect, some embodiments of the disclosure provide a non-transitory computer-readable storage medium comprising a computer program, wherein the program performs the method for information interaction as recited in the first aspect, when it is executed by a processor.

According to the method and apparatus for information interaction provided by some embodiments of the present disclosure, the feature word may be extracted from the textual information of the to-be-processed information, the descriptive information of the image within the to-be-processed information may be obtained, the corresponding relationship between the textual information and the image within the to-be-processed information may be constructed, and then, the response information may be constructed from the descriptive information, thereby enabling the information interaction with to-be-processed information and improving the efficiency of information interaction.

### BRIEF DESCRIPTION OF THE DRAWINGS

Other features, objectives and advantages of the present application will become more apparent upon reading the detailed description to non-limiting embodiments with reference to the accompanying drawings:
Fig. 1 is an architectural diagram of an illustrative system in which the present application may be implemented;
Fig. 2 is a schematic flowchart of a method for information interaction according to an embodiment of the present application;
Fig. 3 is a schematic diagram of an application scenario of the method for information interaction according to an embodiment of the present application;
Fig. 4 is a structural schematic diagram of an apparatus for information interaction according to an embodiment of the present application; and
Fig. 5 is a structural schematic diagram of a computer system adapted to implement a server of some embodiments of the present application.

### DETAILED DESCRIPTION OF THE EMBODIMENTS

The present application will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the embodiments in the present application and the features in the embodiments may be combined with each other on a non-conflict basis. The present application will be described below in detail with reference to the accompanying drawings and in combination with the embodiments.

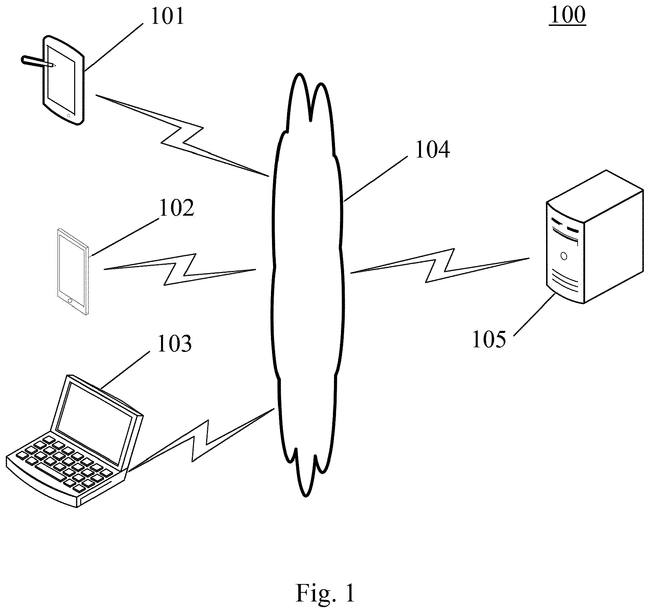

Fig. 1 shows an illustrative architecture of a system 100 which may be used by a method for information interaction or an apparatus for information interaction according to some embodiments of the present application.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless transmission links, or optical fibers.

The user may use the terminal device 101, 102, or 103 to interact with the server 105 through the network 104, in order to transmit to-be-processed information or receive response information, etc. Various communication client applications, such as webbrowser applications, instant messaging tools, and social platform software may be installed on the terminal devices 101, 102, and 103.

The terminal devices 101, 102, and 103 may be various electronic devices having a display capable of editing information, including but not limited to, smart phones, tablet computers, laptop computers, and desktop computers.

The server 105 may be a server providing various services, for example, a server processing the to-be-processed information on the terminal device 101, 102, or 103. The server may obtain the to-be-processed information on the terminal device 101, 102, or 103; extract a feature word from the textual information of the to-be-processed information, and search for descriptive information of the image within the to-be-processed information based on the feature word; and finally construct response information to the to-be-processed information from the descriptive information, thereby realizing the information interaction.

It should be noted that the method for information interaction according to some embodiments of the present application may be executed separately by the terminal device 101, 102, or 103, or by the combination of the server 105, and the terminal device 101, 102, or 103. Accordingly, the apparatus for information interaction may be installed on the terminal device 101, 102, or 103, or the server 105.

It should be appreciated that the numbers of the terminal devices, the networks and the servers in Fig. 1 are merely illustrative. Any number of terminal devices, networks and servers may be provided based on the actual requirements.

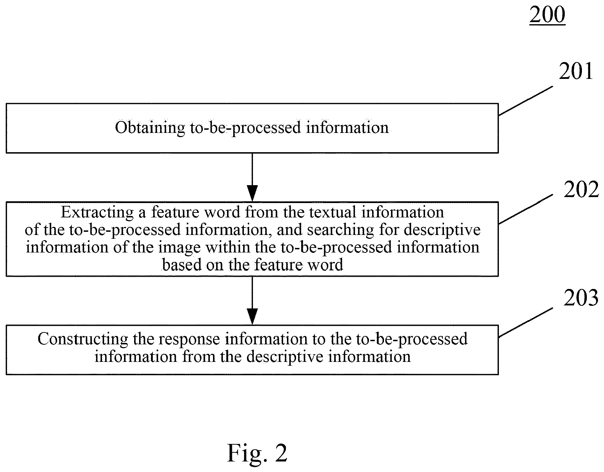

Referring to Fig. 2, the flowchart 200 of an embodiment of the method for information interaction according to the disclosure is illustrated. The method includes steps as below:
Step 201, obtaining to-be-processed information.

In the present embodiment, an electronic apparatus on which the method for information interaction runs (e.g., terminal device 101, 102, or 103, or server 105 shown in Fig. 1) may obtain the to-be-processed information via wired or wireless networking, wherein the to-be-processed information includes textual information and an image. The wireless networking may include but not limited to 3G/4G networking, WiFi networking, Bluetooth, WiMAX, Zigbee, UWB(Ultra-wideband), or any other types of wireless networking that are existing or to be developed.

A user may perform operations relating to texts and images using an information processing application installed on the terminal device 101, 102, or 103. For example, the user may input the textual information and image into the information processing application, wherein the image may include various objects (such as an image of a plant or an animal) and the textual information may be a text of "just photographed outside, never seen before, who recognizes this." The terminal device 101, 102, or 103, or server 105 may use the information including the textual information and image as to-be-processed information.

Step 202, extracting a feature word from the textual information of the to-be-processed information, and searching for descriptive information of the image within the to-be-processed information based on the feature word.

After obtaining the to-be-processed information, a feature word needs to be extracted from the textual information of the to-be-processed information. The feature word is used to characterize a search request for the image, for example, the feature word may be "who knows," "what is it," etc.

The feature word is obtained, which means that the user wants to know the information of the image. Then, various search methods can be used to search for descriptive information of the image. The descriptive information is used to characterize a textual description of the image and it may be "XXX (the name of a plant), scientific name XX, belong to genus *Lilium* in the family *Liliaceae*, perennial herb, country of origin is China...."

In some optional implementations of the present embodiment, the extracting a feature word from the textual information of the to-be-processed information may include:

First step, performing a semantic recognition on the textual information to obtain semantic information corresponding to the textual information.

Consider the above textual information of "just photographed outside, never seen before, who recognize this" as an example, the semantic recognition is performed on the aforementioned textual information, and a corresponding semantic information of "what is it in the picture" may be obtained.

Second step, extracting the feature word from the semantic information.

The aforementioned semantic information is "what is it in the picture," and then the corresponding feature word may be "picture" and "what is it."

It should be noted that the textual information of the to-be-processed information may include the feature word directly. For example, the textual information may be "who know what is the plant in the picture," then "picture," "what is," and "plant" may be the feature word.

In some optional implementations of the present embodiment, the searching for descriptive information of the image within the to-be-processed information based on the feature word may include:

First step, importing the image into an image search model to obtain a to-be-matched image set corresponding to the image.

The image search model can extract an image characteristic from the inputted image, find an image having an image characteristic identical or similar to the aforementioned image characteristic, in a local image database or via networking, etc., and use it as the to-be-matched image. The to-be-matched image set may include at least one to-be-matched image. The image search model is configured to characterize a first corresponding relationship between the image and the to-be-matched image. The first corresponding relationship may refer to a identity relationship or similarity relationship between the imported image and the to-be-matched image.

Second step, importing the to-be-matched image into a semantic tagging model to obtain a semantic tag set corresponding to the to-be-matched image set.

The to-be-matched image is an image identical or similar to the imported image, which is found locally or on the Internet. When the to-be-matched image is found, the to-be-matched image may be imported into the semantic tagging model to obtain the semantic tag corresponding to the to-be-matched image. The semantic tagging model is configured to characterize a second corresponding relationship between the to-be-matched image and the semantic tag, and the semantic tag is used to provide a textual description of the to-be-matched image. For example, a semantic tag corresponding to a to-be-matched image may be "this is a lily."

Third step, selecting a to-be-recognized semantic tag from the semantic tag set, and using interpretive information of a noun in the to-be-recognized semantic tag, the noun corresponding to the image, as the descriptive information.

When an image is imported into the image search model, at least one to-be-matched image is obtained. Each to-be-matched image has a semantic tag, while the imported image needs only one semantic tag. Thus, the semantic tag that matches the imported image best may be chosen from the semantic tag set and used as a to-be-recognized semantic tag. Interpretive information of a noun in the to-be-recognized semantic tag, the noun corresponding to the imported image, may be used as descriptive information. For example, if a to-be-recognized semantic tag is "This is a lily," then "lily" is the noun corresponding to the imported image. Interpretive information of "lily" may be obtained via a searching locally or on the Internet, and the interpretive information may be used as the descriptive information of the imported image.

In some optional implementations of the present embodiment, the selecting a to-be-recognized semantic tag from the semantic tag set may include: counting numbers of identical semantic tags within the semantic tag set, and using the semantic tag having a maximum number as the to-be-recognized semantic tag.

Importing an image into an image search model may obtain at least one to-be-matched image. And each to-be-matched image has a semantic tag. Different to-be-matched images may have an identical semantic tag. For example, the to-be-matched image may be a plurality of photos of the same plant, which were photographed from different angles respectively. Then the corresponding semantic tags obtained may be identical. The greater the number of the semantic tags is, the more photographed angles of the imported image correspond to a given subject of the photograph. Thus, the number of identical semantic tags within the semantic tag set may be counted and the semantic tag having a maximum number may be used as the to-be-recognized semantic tag.

Step 203, constructing the response information to the to-be-processed information from the descriptive information.

When the descriptive information is obtained, response information to the to-be-processed information may be constructed from the descriptive information. For example, the descriptive information may be "XXX [the name of a plant], scientific name XX, the genus *Lilium* in the family *Liliaceae*, perennial herb, country of origin is China...," the response information may be "What in the picture is XXX [the name of the plant], for more details, referring:
https://xxx.xxx.com/item/%E7%99%B %88/7886?fr=aladd in&from id=7780&fromtitle=%E7%99%B E%E5%90%88%E8%8A%B1." Then, the response information may be sent to the terminal device 101, 102, or 103 to perform information interaction with the to-be-processed information in the terminal device 101, 102, or 103.

In some optional implementations of the present embodiment, the method further includes: correcting the descriptive information. The correcting the descriptive information may include:
First step, receiving feedback information corresponding to the response information, wherein the feedback information is used to evaluate an accuracy of the response information.
   After the response information is sent to the terminal device 101, 102, or 103, other users may give comments of the response information on whether it is accurate or not, or correct or not. For example, the comment may be "yes, it is XXX, I have one at home," "It's wrong, it should be XXX," "May be YYY, does not look like XXX," etc. These comments from users may be considered as the feedback information of the response information.
Second step, performing a semantic recognition on the feedback information to obtain the accuracy.
   The accuracy represented by different feedback information may be different. For example, the result of the semantic recognition on "yes, it is XXX, I have one at home" may be "The response information is correct"; the result of the semantic recognition on "It's wrong, it should be XXX" may be "The response information is wrong"; the result of the semantic recognition on "May be YYY, does not look like XXX" may be "The response information is indeterminate." Thus, the accuracy of the "yes, it is XXX, I have one at home" may be set as 100%; the accuracy of the "It's not, it should be XXX" may be set as 0%; and the accuracy of the "May be YYY, does not like XXX" may be set as 50%. The accuracy of the response information may be obtained by counting all accuracies in a period. For example, when there are eight of the accuracy of 100%, one of the accuracy of 0%, one of the accuracy of 50%, the accuracy may be (8*100%+1*0%+1*50%)/10=85%.
Third step, choosing a secondary to-be-recognized tag from the semantic tags in the semantic tag set excluding the to-be-recognized semantic tag, in response to determining that the accuracy is below a preset threshold.
   The accuracy may indicate correctness of the response information. When the accuracy is above a preset threshold, the response information may be considered as correct. For example, if there are eight of ten pieces of feedback information have the corresponding response information that is considered to be correct, then the response information may be considered directly as 100% correct. When the accuracy is below a preset threshold (e.g., 69%), the response information may be considered as incorrect. Then a semantic tag my be chosen from the semantic tags in the semantic tag set excluding the to-be-recognized semantic tag corresponding to the response information, and used as a secondary to-be-recognized tag.
Step 4, using the interpretive information of the noun in the secondary to-be-recognized tag, the noun corresponding to the image, as secondary descriptive information.
   Similar to the process recited above, the interpretive information of the noun within the secondary to-be-recognized tag may be used as the secondary descriptive information.
Step 5, constructing the response information to the to-be-processed information from the secondary descriptive information.

The response information may be reconstructed from the secondary descriptive information and then sent to the terminal device 101, 102, or 103.

It should be noted that, if the accuracy of the feedback information corresponding to the response information obtained from the secondary descriptive information is still below the preset threshold, the response information obtained from other to-be-processed information tags may be chosen sequentially until the corresponding accuracy is above the preset threshold.

When it is determined that the response information is correct, a corresponding relationship between the image within the to-be-processed information and the response information may be constructed and stored in a database, for the purpose of subsequent search for the image and response information.

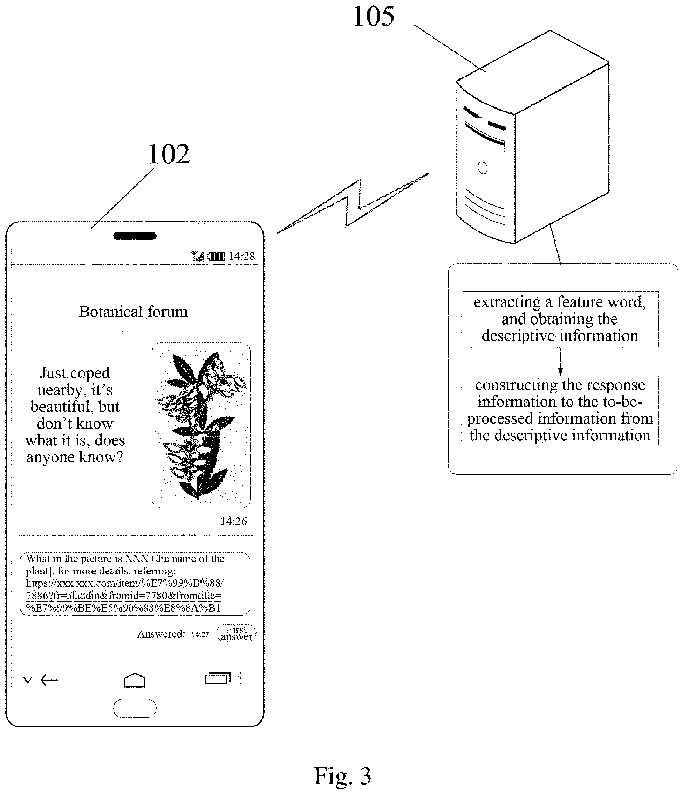

Referring to Fig. 3, a schematic diagram illustrating an application scenario of a method for information interaction according to the present disclosure is illustrated.

In the application scenario of Fig. 3, a user sends a message of "Just coped nearby, it's beautiful, but don't know what it is, does anyone know?" via the terminal device 102 at a botanical forum, and adds a corresponding image. The server 105 obtains the content sent by the user and uses it as the to-be-processed information. Then the server 105 extracts a feature word "What is it" from the textual information, obtains the descriptive information corresponding to the image, constructs response information from the descriptive information, and sends the response information to the terminal device 102.

According to the methods provided by some embodiments of the present disclosure, the feature word may be extracted from the textual information of the to-be-processed information, the descriptive information of the image within the to-be-processed information may be obtained, the corresponding relationship between the textual information and the image within the to-be-processed information may be constructed, and then, the response information may be constructed from the descriptive information, thereby enabling the information interaction with the to-be-processed information.

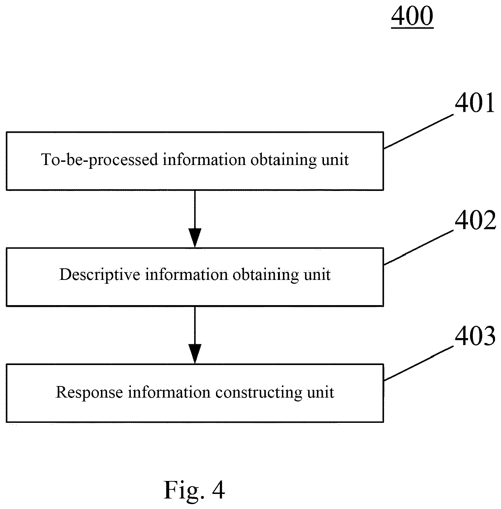

Further referring to Fig. 4, as the implementations of the methods illustrated in the aforementioned drawings, an embodiment of an apparatus for information interaction is provided in the present disclosure. The embodiment is corresponding to the embodiment of the method illustrated in Fig. 2. The apparatus is applicable to various electronic apparatus.

As illustrated in Fig. 4, the apparatus 400 for information interaction provided in the present embodiment may include: a to-be-processed information obtaining unit 401, a descriptive information obtaining unit 402, and a response information constructing unit 403. The to-be-processed information obtaining unit 401 is configured to obtain to-be-processed information, wherein the to-be-processed information includes textual information and an image. The descriptive information obtaining unit 402 is configured to extract a feature word from the textual information of the to-be-processed information, and search for descriptive information of the image within the to-be-processed information based on the feature word, the feature word being used to characterize a search request for the image, and the descriptive information being used to characterize a textual description of the image. The response information constructing unit 403 is configured to construct response information to the to-be-processed information from the descriptive information.

In some optional implementations of the present embodiment, the descriptive information obtaining unit 402 may include a semantic recognition subunit (not shown) and a feature word extracting subunit (not shown). The semantic recognition subunit is configured to perform a semantic recognition on the textual information to obtain semantic information corresponding to the textual information. The feature word extracting subunit is configured to extract the feature word from the semantic information.

In some optional implementations of the present embodiment, the descriptive information obtaining unit 402 may include: a to-be-matched image obtaining subunit (not shown), a semantic tag obtaining subunit (not shown), and a descriptive information obtaining subunit (not shown). The to-be-matched image obtaining subunit is configured to import the image into an image search model to obtain a to-be-matched image set corresponding to the image, wherein the to-be-matched image set comprises at least one to-be-matched image, and the image search model is configured to characterize a first corresponding relationship between the image and the to-be-matched image. The semantic tag obtaining subunit is configured to import the to-be-matched image into a semantic tagging model to obtain a semantic tag set corresponding to the to-be-matched image set, wherein the semantic tagging model is configured to characterize a second corresponding relationship between the to-be-matched image and a semantic tag, and the semantic tag is used to provide a textual description of the to-be-matched image. The descriptive information obtaining subunit is configured to select a to-be-recognized semantic tag from the semantic tag set, and use interpretive information of a noun in the to-be-recognized semantic tag, the noun corresponding to the image, as the descriptive information.

In some optional implementations of the present embodiment, the descriptive information obtaining subunit is further configured to count numbers of identical semantic tags within the semantic tag set, and use the semantic tag having a maximum number as the to-be-recognized semantic tag.

In some optional implementations of the present embodiment, the apparatus for information interaction 400 may further includes a correction unit (not shown) configured to correct the descriptive information. The correction unit may include: a feedback information receiving subunit, an accuracy obtaining subunit, a secondary to-be-recognized tag obtaining subunit, a secondary descriptive information obtaining subunit, and a secondary response information constructing subunit. The feedback information receiving subunit is configured to receive feedback information corresponding to the response information, wherein the feedback information is used to evaluate an accuracy of the response information. The accuracy obtaining subunit is configured to perform a semantic recognition on the feedback information to obtain the accuracy. The secondary to-be-recognized tag obtaining subunit is configured to choose a secondary to-be-recognized tag from the semantic tags in the semantic tag set excluding the to-be-recognized semantic tag, in response to determining that the accuracy is below a preset threshold. The secondary descriptive information obtaining subunit is configured to use the interpretive information of the noun in the secondary to-be-recognized tag, the noun corresponding to the image, as secondary descriptive information. The secondary response information constructing subunit is configured to construct the response information to the to-be-processed information from the secondary descriptive information.

A server is further provided in the present embodiment, including one or more processor; and a storage device that is configured to store one or more programs, which, when executed by the one or more processors, cause the processors to perform the aforementioned method for information interaction.

A non-transitory computer-readable storage medium is further provided in the present embodiment, including a computer program, which, when executed by a processor, performs the aforementioned method for information interaction.

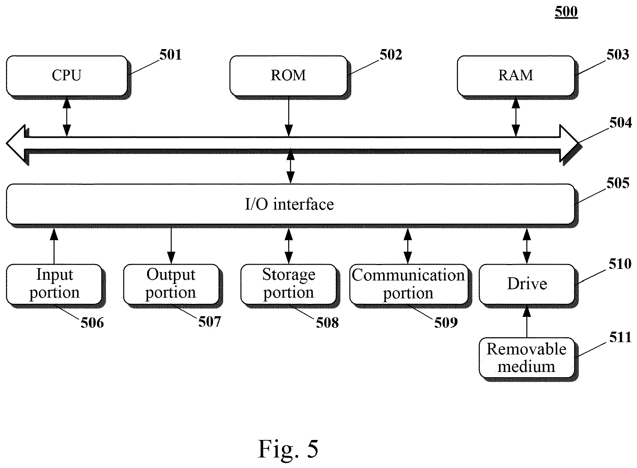

Referring to Fig. 5, a schematic structural diagram of a computer system 500 adapted to implement a server of some embodiments of the present application is shown. The server shown in Fig. 5 is merely an example and should not impose any restriction on the function and scope of use of some embodiments of the present application.

As shown in Fig. 5, the computer system 500 includes a central processing unit (CPU) 501, which may execute various appropriate actions and processes in accordance with a program stored in a read-only memory (ROM) 502 or a program loaded into a random access memory (RAM) 503 from a storage portion 508. The RAM 503 also stores various programs and data required by operations of the system 500. The CPU 501, the ROM 502 and the RAM 503 are connected to each other through a bus 504. An input/output (I/O) interface 505 is also connected to the bus 504.

The following components are connected to the I/O interface 505: an input portion 506 including a keyboard, a mouse etc.; an output portion 507 comprising a cathode ray tube (CRT), a liquid crystal display device (LCD), a speaker etc.; a storage portion 508 including a hard disk and the like; and a communication portion 509 comprising a network interface card, such as a LAN card and a modem. The communication portion 509 performs communication processes via a network, such as the Internet. A drive 510 is also connected to the I/O interface 505 as required. A removable medium 511, such as a magnetic disk, an optical disk, a magnetooptical disk, and a semiconductor memory, may be installed on the drive 510, to facilitate the retrieval of a computer program from the removable medium 511, and the installation thereof on the storage portion 508 as needed.

In particular, according to embodiments of the present disclosure, the process described above with reference to the flow chart may be implemented in a computer software program. For example, an embodiment of the present disclosure includes a computer program product, which comprises a computer program that is tangibly embedded in a machine-readable medium. The computer program comprises program codes for executing the method as illustrated in the flow chart. In such an embodiment, the computer program may be downloaded and installed from a network via the communication portion 509, and/or may be installed from the removable media 511. The computer program, when executed by the central processing unit (CPU) 501, implements the above mentioned functionalities as defined by the methods of the present disclosure.

It should be noted that the computer readable medium in the present disclosure may be computer readable storage medium. An example of the computer readable storage medium may include, but not limited to: semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any physical medium containing or storing programs which may be used by a command execution system, apparatus or element or incorporated thereto. The computer readable medium may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units or modules involved in some embodiments of the present application may be implemented by means of software or hardware. The described units or modules may also be provided in a processor, for example, described as: a processor, comprising a to-be-processed information obtaining unit, a descriptive information obtaining unit, and a response information constructing unit, where the names of these units or modules do not in some cases constitute a limitation to such units or modules themselves. For example, the response information constructing unit may also be described as "a unit for constructing response information."

In another aspect, the present application further provides a non-transitory computer-readable storage medium. The non-transitory computer-readable storage medium may be the non-transitory computer-readable storage medium included in the apparatus in the above described embodiments, or a stand-alone non-transitory computer-readable storage medium not assembled into the apparatus. The non-transitory computer-readable storage medium stores one or more programs. The one or more programs, when executed by a device, cause the device to: obtain to-be-processed information, the to-be-processed information comprising textual information and an image; extract a feature word from the textual information of the to-be-processed information, and search for descriptive information of the image within the to-be-processed information based on the feature word, the feature word being used to characterize a search request for the image, and the descriptive information being used to characterize a textual description of the image; and construct response information to the to-be-processed information from the descriptive information.

The above description only provides an explanation of the preferred embodiments of the present application and the technical principles used. It should be appreciated by those skilled in the art that the inventive scope of the present application is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present application are examples.

## Claims

1. A method for information interaction, **characterized in that** the method comprises:
obtaining to-be-processed information, the to-be-processed information comprising textual information and an image;
extracting a feature word from the textual information of the to-be-processed information, and searching for descriptive information of the image within the to-be-processed information based on the feature word, the feature word being used to characterize a search request for the image, and the descriptive information being used to characterize a textual description of the image; and
constructing response information to the to-be-processed information from the descriptive information.

2. The method according to claim 1, **characterized in that** the extracting a feature word from the textual information of the to-be-processed information comprises:
performing a semantic recognition on the textual information to obtain semantic information corresponding to the textual information; and
extracting the feature word from the semantic information.

3. The method according to claim 1, **characterized in that** the searching for descriptive information of the image within the to-be-processed information based on the feature word comprises:
importing the image into an image search model to obtain a to-be-matched image set corresponding to the image, wherein the to-be-matched image set comprises at least one to-be-matched image, and the image search model is configured to characterize a first corresponding relationship between the image and the to-be-matched image;
importing the to-be-matched image into a semantic tagging model to obtain a semantic tag set corresponding to the to-be-matched image set, wherein the semantic tagging model is configured to characterize a second corresponding relationship between the to-be-matched image and a semantic tag, and the semantic tag is used to provide a textual description of the to-be-matched image; and
selecting a to-be-recognized semantic tag from the semantic tag set, and using interpretive information of a noun in the to-be-recognized semantic tag, the noun corresponding to the image, as the descriptive information.

4. The method according to claim 3, **characterized in that** the selecting a to-be-recognized semantic tag from the semantic tag set comprises:
counting numbers of identical semantic tags within the semantic tag set, and using the semantic tag having a maximum number as the to-be-recognized semantic tag.

5. The method according to claim 4, **characterized in that** the method further comprises correcting the descriptive information, and the correcting the descriptive information comprises:
receiving feedback information corresponding to the response information, wherein the feedback information is used to evaluate an accuracy of the response information;
performing a semantic recognition on the feedback information to obtain the accuracy;
choosing a secondary to-be-recognized tag from the semantic tags in the semantic tag set excluding the to-be-recognized semantic tag, in response to determining that the accuracy is below a preset threshold;
using the interpretive information of the noun in the secondary to-be-recognized tag, the noun corresponding to the image, as secondary descriptive information; and
constructing the response information to the to-be-processed information from the secondary descriptive information.

6. An apparatus for information interaction, **characterized in that** the apparatus comprises:
a to-be-processed information obtaining unit configured to obtain to-be-processed information, the to-be-processed information comprising textual information and an image;
a descriptive information obtaining unit configured to extract a feature word from the textual information of the to-be-processed information, and search for descriptive information of the image within the to-be-processed information based on the feature word, the feature word being used to characterize a search request for the image, and the descriptive information being used to characterize a textual description of the image; and
a response information constructing unit configured to construct response information to the to-be-processed information from the descriptive information.

7. The apparatus of according to claim 6, **characterized in that** the descriptive information obtaining unit comprises:
a semantic recognition subunit configured to perform a semantic recognition on the textual information to obtain semantic information corresponding to the textual information; and
a feature word extracting subunit configured to extract the feature word from the semantic information.

8. The apparatus according to claim 6, **characterized in that** the descriptive information obtaining unit comprises:
a to-be-matched image obtaining subunit configured to import the image into an image search model to obtain a to-be-matched image set corresponding to the image, wherein the to-be-matched image set comprises at least one to-be-matched image, and the image search model is configured to characterize a first corresponding relationship between the image and the to-be-matched image;
a semantic tag obtaining subunit configured to import the to-be-matched image into a semantic tagging model to obtain a semantic tag set corresponding to the to-be-matched image set, wherein the semantic tagging model is configured to characterize a second corresponding relationship between the to-be-matched image and a semantic tag, and the semantic tag is used to provide a textual description of the to-be-matched image; and
a descriptive information obtaining subunit configured to select a to-be-recognized semantic tag from the semantic tag set, and use interpretive information of a noun in the to-be-recognized semantic tag, the noun corresponding to the image, as the descriptive information.

9. The apparatus according to claim 8, **characterized in that** the descriptive information obtaining subunit is further configured to count numbers of identical semantic tags within the semantic tag set, and use the semantic tag having a maximum number as the to-be-recognized semantic tag.

10. The apparatus according to claim 9, **characterized in that** the apparatus further comprises a correction unit configured to correct the descriptive information, and the correction unit comprises:
a feedback information receiving subunit configured to receive feedback information corresponding to the response information, wherein the feedback information is used to evaluate an accuracy of the response information;
an accuracy obtaining subunit configured to perform a semantic recognition on the feedback information to obtain the accuracy;
a secondary to-be-recognized tag obtaining subunit configured to choose a secondary to-be-recognized tag from the semantic tags in the semantic tag set excluding the to-be-recognized semantic tag, in response to determining that the accuracy is below a preset threshold;
a secondary descriptive information obtaining subunit configured to use the interpretive information of the noun in the secondary to-be-recognized tag, the noun corresponding to the image, as secondary descriptive information; and
a secondary response information constructing subunit configured to construct the response information to the to-be-processed information from the secondary descriptive information.

11. A server comprising:
one or more processors; and
a storage device, configured to store one or more programs, **characterized in that** the one or more programs, when executed by the one or more processors, cause the one or more processors to implement the method according to any one of claims 1-5.

12. A computer readable storage medium, storing a computer program, **characterized in that** the program, when executed by a processor, implements the method according to any one of claims 1-5.
